# EUROPEAN PATENT APPLICATION

(11) **EP 2 524 809 A1**
(43) Date of publication of application: **21.11.2012**
(21) Application number: 11166852.1
(22) Date of filing: 20.05.2011
(51) Int. Cl.: B41F 31/20, F16C 13/00, B41F 9/08, B41F 9/10

(54) **Ink wiping system for an intaglio printing press**

(71) Applicant: KBA-NotaSys SA, 1000 Lausanne 22 (CH)
(72) Inventor: Claude, Laurent, 1025 St-Sulpice (CH); Merminod, Antoine, 1188 Gimel (CH)
(74) Representative: Noll, Ronald

(57) **Abstract**

There is described an ink wiping system (100) for an intaglio printing press comprising a rotatable wiping roller assembly (102) for wiping excess ink from the surface of a rotatable intaglio printing cylinder (80). The rotatable wiping roller assembly (102) comprises a rotatable hollow cylindrical body (110) having an outer surface (110a) positioned for wiping the surface of the printing cylinder (80), and a pressing device (130) disposed inside the cylindrical body (110) for exerting pressure on an inner surface (11 Ob) of the cylindrical body (110) and for adjusting a wiping pressure between the cylindrical body and the intaglio printing cylinder (80). The pressing device (130) preferably comprises a plurality of pressing units (132) that are distributed axially along the inside of the hollow cylindrical body (110) for adjusting the wiping pressure between the cylindrical body (110) and the intaglio printing cylinder at a plurality of axial positions.

## Description

### TECHNICAL FIELD

The present invention generally relates to the wiping of rotatable intaglio printing cylinders of intaglio printing presses. More precisely, the present invention relates to an ink wiping system for an intaglio printing press comprising a rotatable wiping roller assembly for wiping excess ink from the surface of a rotatable intaglio printing cylinder of the intaglio printing press, an intaglio printing press comprising such an ink wiping system, as well as a pressing device for exerting pressure on an inner surface of a displaceable wiping medium whose outer surface is positioned to wipe excess ink from the surface of a rotatable intaglio printing cylinder of an intaglio printing press.

### BACKGROUND OF THE INVENTION

Intaglio printing presses are widely used in security printing for printing security documents, especially banknotes. Prior art intaglio printing presses are for instance disclosed in Swiss Patent No. CH 477 293, European Patent Applications Nos. EP 0 091 709 A1, EP 0 406 157 A1, EP 0 415 881 A2, EP 0 563 007 A1, EP 0 873 866 A1, EP 1 602 483 A1, and International Applications Nos. WO 01/54904 A1, WO 03/047862 A1, WO 2004/026580 A1, WO 2005/118294 A1.

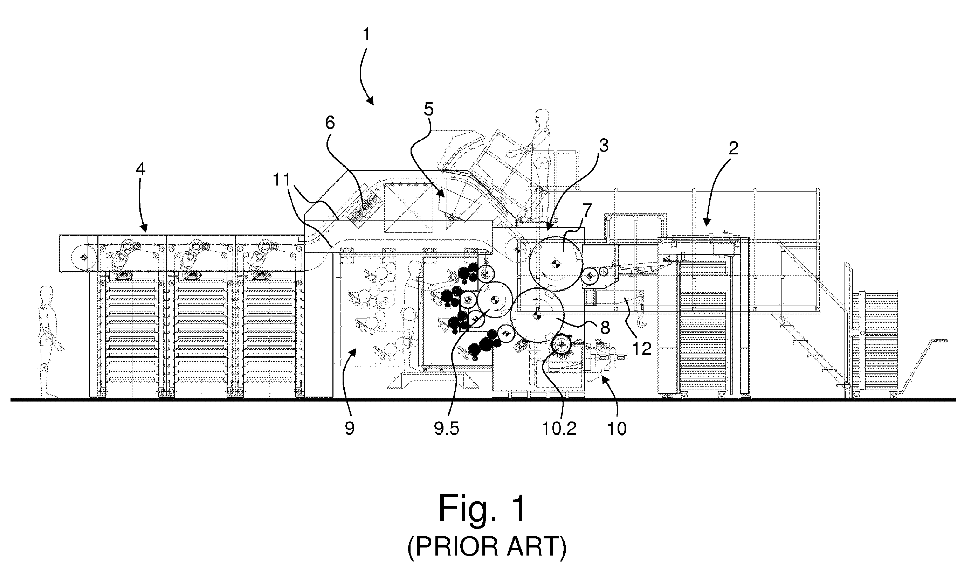

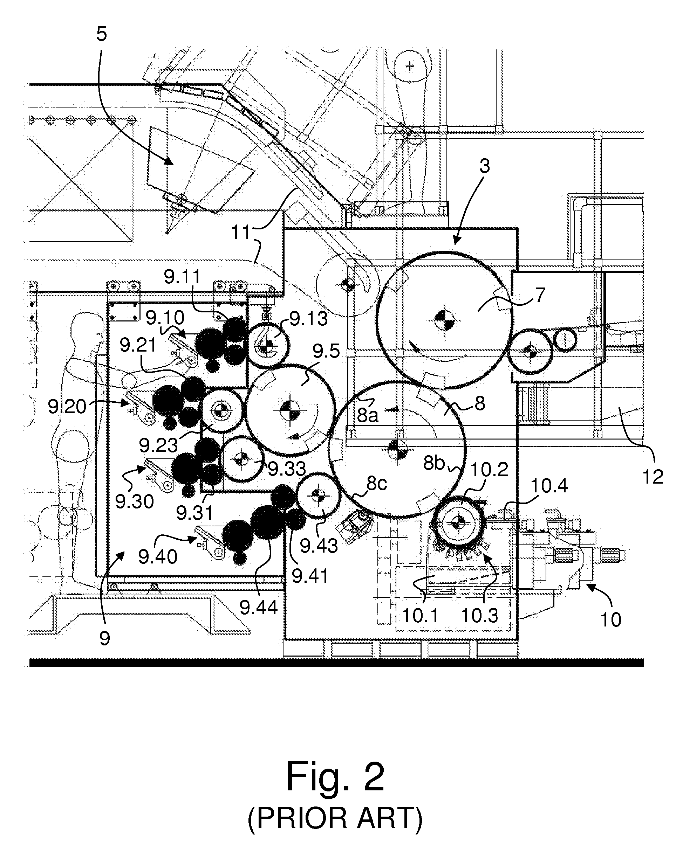

Figures 1 and 2 schematically illustrate a known intaglio printing press configuration with an intaglio printing unit configuration similar to that disclosed in European Patent Application No. EP 0 091 709 A1.

Figure 1 shows a sheet-fed intaglio printing press 1 comprising, as is usual in the art, a sheet feeder 2 for feeding sheets to be printed, an intaglio printing unit 3 for printing the sheets, and a sheet delivery unit 4 for collecting the freshly-printed sheets. The intaglio printing unit 3 typically includes an impression cylinder 7, a plate cylinder 8 carrying intaglio printing plates (in this example, the plate cylinder 8 is a three-segment cylinder carrying three intaglio printing plates 8a, 8b, 8c - Figure 2), an inking system 9 for inking the surface of the intaglio printing plates 8a, 8b, 8c carried by the plate cylinder 8 and an ink wiping system 10 for wiping the inked surface of the intaglio printing plates 8a, 8b, 8c carried by the plate cylinder 8 prior to printing of the sheets.

The sheets are fed from the sheet feeder 2 onto a feeder table and then onto the impression cylinder 7. The sheets are then carried by the impression cylinder 7 to the printing nip formed by the contact location between the impression cylinder 7 and the plate cylinder 8 where intaglio printing is performed. Once printed, the sheets are transferred from the impression cylinder 7 to a sheet transporting system 11 in order to be delivered to the delivery unit 4. The sheet transporting system 11 conventionally comprises an endless conveying system with a pair of endless chains driving a plurality of spaced-apart gripper bars for holding a leading edge of the sheets (the freshly-printed side of the sheets being oriented downwards on their way to the delivery unit 4), sheets being transferred in succession from the impression cylinder 7 to a corresponding one of the gripper bars.

During their transport to the sheet delivery unit 4, the freshly printed sheets are preferably inspected by an optical inspection system 5. In the illustrated example, the optical inspection system 5 is advantageously disposed along the path of the sheet transporting system 11, right after the printing unit 3. Such an optical inspection system 5 is already known in the art and does not need to be described in detail. Examples of optical inspection systems adapted for use as optical inspection system 5 in the intaglio printing press of Figure 1 are for instance described in International Applications Nos. WO 97/36813 A1, WO 97/37329 A1 and WO 03/070465 A1. Such inspection systems are in particular marketed by the Applicant under the product designation NotaSave®.

Before delivery, the printed sheets are preferably transported in front of a drying unit 6 disposed after the inspection system 5 along the transport path of the sheet transporting system 11. Drying could possibly be performed prior to the optical inspection of the sheets.

Figure 2 is a schematic view of the intaglio printing unit 3 of the intaglio printing press 1 of Figure 1. As already mentioned, the intaglio printing unit 3 basically includes the impression cylinder 7, the plate cylinder 8 with its intaglio printing plates 8a, 8b, 8c, the inking system 9 and the ink wiping system 10.

The inking system 9 comprises in this example four inking devices, three of which cooperate with a common ink-collecting cylinder or Orlof cylinder 9.5 (here a two-segment cylinder) that contacts the plate cylinder 8. The fourth inking device is disposed so as to directly contact the surface of the plate cylinder 8. It will be understood that the illustrated inking system 9 is accordingly adapted for both indirect and direct inking of the plate cylinder 8. The inking devices cooperating with the ink-collecting cylinder 9.5 each include an ink duct 9.10, 9.20, 9.30 cooperating in this example with a pair of inking rollers 9.11, 9.21 and 9.31, respectively. Each pair of inking rollers 9.11, 9.21, 9.31 in turn inks a corresponding chablon cylinder (also designated as selective inking cylinder) 9.13, 9,23, 9.33, respectively, which is in contact with the ink-collecting cylinder 9.5. As for the fourth inking device, it includes an ink duct 9.40, an additional inking roller 9.44, a pair of inking rollers 9.41 and a chablon cylinder 9.43, this latter cylinder being in contact with the plate cylinder 8. The additional ink roller 9.44 is necessary in this latter case as the fourth inking device 9.4 is used to directly ink the surface of the plate cylinder 8 which rotates in opposite direction as compared to the ink-collecting cylinder 9.5. As is usual in the art, the surface of the chablon cylinders 9.13, 9.23, 9.33 and 9.43 is structured so as to exhibit raised portions corresponding to the areas of the intaglio printing plates 8a, 8b, 8c intended to receive the inks in the corresponding colours supplied by the respective inking devices.

The ink wiping system 10, on the other hand, typically comprises a wiping tank 10.1 (which is movable towards and away from the plate cylinder 8), a wiping roller 10.2 supported in the wiping tank and contacting the plate cylinder 8, cleaning means 10.3 for removing wiped ink residues from the surface of the wiping roller 10.2 using a wiping solution that is sprayed or otherwise applied onto the surface of the wiping roller 10.2, and a drying blade 10.4 contacting the surface of the wiping roller 10.2 for removing wiping solution residues from the surface of the wiping roller 10.2. The wiping roller 10.2 can typically be removed from the wiping tank 10.1 during maintenance operations using a crane 12 (see Figure 2).

A particularly suitable solution for an ink wiping system comprising a wiping roller is disclosed in International Application No. WO 2007/116353 A1 which is incorporated herein by reference in its entirety.

The most common solution used for wiping excess ink from the surface of an intaglio printing cylinder is, as discussed hereinabove, to use a wiping roller assembly that rotates in the same direction as the intaglio printing cylinder. Such wiping roller assembly typically consists of a cylinder base made commonly of metal and bearing at least one layer of wiping material, preferably a layer of polymer material such as PVC material. The structure and manufacture of such wiping rollers is for instance disclosed in US Patents Nos. US 3,785,286, US 3,900,595, US 4,054,685 and International Applications Nos. WO 2007/031925 A2, WO 2007/031927 A2, WO 2007/034362 A2 which are incorporated herein by reference.

As mentioned above, such wiping roller is supported in a wiping tank for rotation against the surface of the intaglio printing cylinder, the surface of the wiping roller being cleaned from wiped ink residues using a wiping solution that is typically sprayed onto the surface of the wiping roller.

With such a known solution, the wiping pressure between the intaglio printing cylinder and the wiping roller is adjusted by playing with the position of the axis of rotation of the wiping roller with respect to the axis of rotation of the intaglio printing cylinder. This is typically achieved by using two adjusting rods or hydraulic cylinders acting on the two ends of the wiping roller. Adjustment mechanisms for adjusting the wiping pressure between a wiping roller and an intaglio printing cylinder are for instance disclosed in European Patent Applications Nos. EP 0 475 890 A1, EP 0 526 398 A1, and US Patents Nos. US 2,987,993, US 3,762,319.

These adjustment mechanisms are however not entirely satisfactory as the ability to adjust the wiping pressure along the contact portion between the wiping roller and the intaglio printing cylinder is limited by the fact that one can only play with the position of the axis of rotation of the wiping roller with respect to the intaglio printing cylinder. It is therefore difficult to ensure that the wiping pressure is adequate or substantially uniform over the whole length of the contact portion between the wiping roller and the intaglio printing cylinder. This furthermore leads to a non-uniform wear of the surface of the wiping roller. An improved solution is thus required.

Furthermore, maintenance operations of the known ink wiping systems are time-consuming as the wiping roller is a relatively heavy component to manipulate, which typically necessitates the use of a crane to remove the wiping roller from the wiping tank (as for instance illustrated in Figures 1 and 2).

Besides the above ink wiping systems that make use of a wiping roller as wiping medium, it is also known to wipe excess ink from the surface of a rotatable intaglio printing plate by means of scraper blade mechanisms and/or wiping webs, such as paper webs. An ink wiping system for an intaglio printing press using a combination of a scraper blade mechanism and of wiping webs is for instance disclosed in US Patent No. US 4,240,347. An ink wiping system for an intaglio printing press using only wiping webs is disclosed in US Patents Nos. US 1,927,056 and US 3,888,172.

According to the solutions described in US Patents Nos. US 1,927,056, US 3,888,172 and US 4,240,347, the wiping web which acts as wiping medium is pressed against the surface of the intaglio printing cylinder by means of a pressing pad or shoe that extends parallel to the axis of rotation of the intaglio printing cylinder. As described more particularly in US Patent No. US 4,240,347, the wiping pressure between the wiping web and the intaglio printing cylinder is adjusted by acting on the two ends of the pressing pad or shoe. Such solutions thus exhibit basically the same problems as the known ink wiping systems which make use of wiping rollers, namely a lack of ability to properly control and adjust the wiping pressure between the wiping medium and the intaglio printing cylinder over the whole length of the contact portion between the wiping medium and the intaglio printing cylinder.

### SUMMARY OF THE INVENTION

A general aim of the invention is therefore to provide an improved ink wiping system for an intaglio printing press.

A further aim of the invention is to provide such an ink wiping system which offers a greater ability to control and adjust the wiping pressure over the whole length of the contact portion between the wiping medium and the intaglio printing cylinder.

Still another aim of the invention is to provide such an ink wiping system which facilitates maintenance operations.

Yet another aim of the invention is to provide an improved pressing device for exerting pressure on an inner surface of a displaceable wiping medium whose outer surface is positioned to wipe excess ink from the surface of a rotatable intaglio printing cylinder of an intaglio printing press.

These aims are achieved thanks to the ink wiping system and pressing device defined in the claims.

There is accordingly provided an ink wiping system for an intaglio printing press comprising a rotatable wiping roller assembly for wiping excess ink from the surface of a rotatable intaglio printing cylinder of the intaglio printing press, the rotatable wiping roller assembly comprising:
- a rotatable hollow cylindrical body having an outer surface positioned for wiping the surface of the intaglio printing cylinder ; and
- a pressing device disposed inside the hollow cylindrical body for exerting pressure on an inner surface of the hollow cylindrical body and for adjusting a wiping pressure between the hollow cylindrical body and the intaglio printing cylinder.

In an advantageous embodiment, the wiping pressure between the hollow cylindrical body and the intaglio printing cylinder is adjustable by the pressing device at a plurality of axial positions along the length of the hollow cylindrical body. Optimal pressure control all along the contact portion between the intaglio printing cylinder and the outer surface of the hollow cylindrical body is thus ensured.

There is also provided an intaglio printing press comprising such an ink wiping system.

There is further provided a pressing device for exerting pressure on a surface of a displaceable wiping medium whose second surface, opposite the first surface, is positioned to wipe excess ink from the surface of a rotatable intaglio printing cylinder of an intaglio printing press, the pressing device extending transversely to a direction of displacement of the wiping medium for adjusting a wiping pressure between the wiping medium and the intaglio printing cylinder at a plurality of transverse positions transversely to the direction of displacement of the wiping medium.

In an advantageous embodiment, the pressing device comprises a plurality of pressing units that are distributed transversely to the direction of displacement of the wiping medium for adjusting the wiping pressure between the wiping medium and the intaglio printing cylinder at said plurality of transverse positions transversely to the direction of displacement of the wiping medium.

Further advantageous embodiments of the invention form the subjectmatter of the dependent claims and are discussed below.

### BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:
Figure 1 is a side-view of a known intaglio printing press ;
Figure 2 is an enlarged side view of the intaglio printing unit of the intaglio printing press of Figure 1 ;
Figure 3 is a schematic side view of an ink wiping system in accordance with a preferred embodiment of the invention, the wiping system being illustrated in a working position contacting an intaglio printing cylinder of an intaglio printing press ;
Figures 4 to 8 are perspective views of the ink wiping system of Figure 3;
Figure 9 is a perspective sectional view of the rotatable hollow cylindrical body (taken along an axis of rotation of the hollow cylindrical body) of the ink wiping system mounted on a supporting mechanism;
Figure 10 is a schematic sectional view of the rotatable hollow cylindrical body of Figure 9 (taken perpendicularly to the axis of rotation of the hollow cylindrical body) in the working position contacting the intaglio printing cylinder of the intaglio printing press ;
Figure 11 is a perspective sectional view of an inner portion of the hollow cylindrical body (taken perpendicularly to the axis of rotation of the hollow cylindrical body) ;
Figure 12 is a perspective sectional view of an inner portion of the rotatable hollow cylindrical body (taken along an axis of rotation of the hollow cylindrical body) of the ink wiping system illustrating the application of pressure on an inner surface of the hollow cylindrical body via a plurality of pressing units ;
Figure 13 is an enlarged perspective view of a driving end of the rotatable hollow cylindrical body where the rotatable hollow cylindrical body is driven into rotation ;
Figure 14 is an exploded view of the ink wiping system with an arm of the supporting mechanism disassembled from the hollow cylindrical body ;
Figure 15 is an exploded view of the ink wiping system with a coupler part disassembled from the hollow cylindrical body ;
Figure 16 is an exploded view of the ink wiping system with the hollow cylindrical body removed from the pressing device ;
Figure 17 is an enlarged exploded view of the driving end of the hollow cylindrical body with an example of a coupler arrangement disassembled.

### DETAILED DESCRIPTION OF EMBODIMENTS OF THE INVENTION

Within the scope of the present invention, the expression "intaglio printing cylinder" designates either a cylinder whose surface is engraved to form intaglio patterns or a plate cylinder carrying at least one intaglio printing plate on its circumference. In the following description, the intaglio printing cylinder is a plate cylinder carrying several intaglio printing plates on its circumference.

Further, within the scope of the present invention, the expression "wiping medium" designates a medium having an outer surface positioned to wipe excess ink from the surface of a rotatable intaglio printing cylinder of an intaglio printing press and a first surface onto which a pressing device acts to urge the second surface of the wiping medium, opposite the first surface, against the surface of the intaglio printing cylinder that is to be wiped off excess ink. In a preferred embodiment of the present invention, the wiping medium takes the shape of a hollow cylindrical body, the first and second surfaces of the wiping medium being respectively an inner surface and an outer surface of the hollow cylindrical body. The wiping medium can alternatively take the shape of a wiping web that is unwound from a supply roll and would around a waste roll.

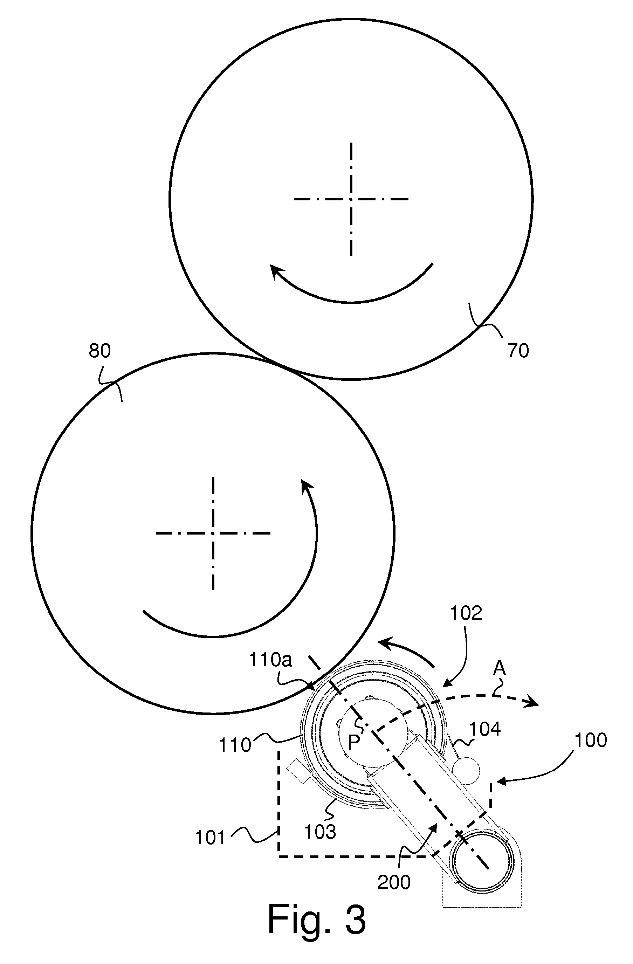

Figure 3 shows a schematic representation of an ink wiping system 100 for an intaglio printing unit in accordance with the invention. As is known in the art, an impression cylinder 70 and an intaglio printing cylinder 80 cooperate in rotation. In the present embodiment, it is to be understood that the intaglio printing cylinder 80 is designed as a plate cylinder carrying a plurality of intaglio printing plates (as in the example of Figures 1 and 2).

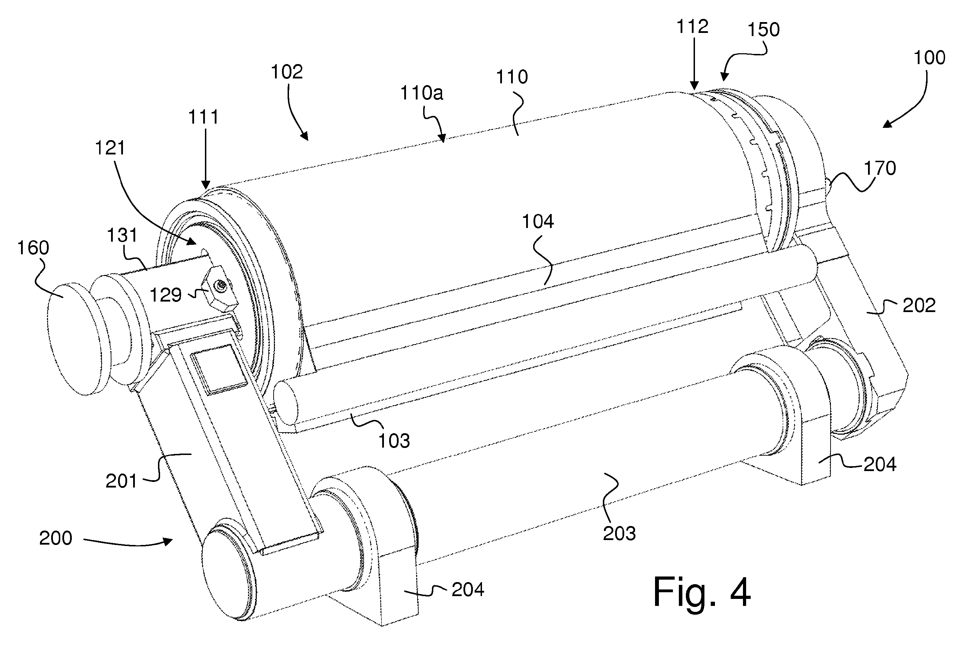

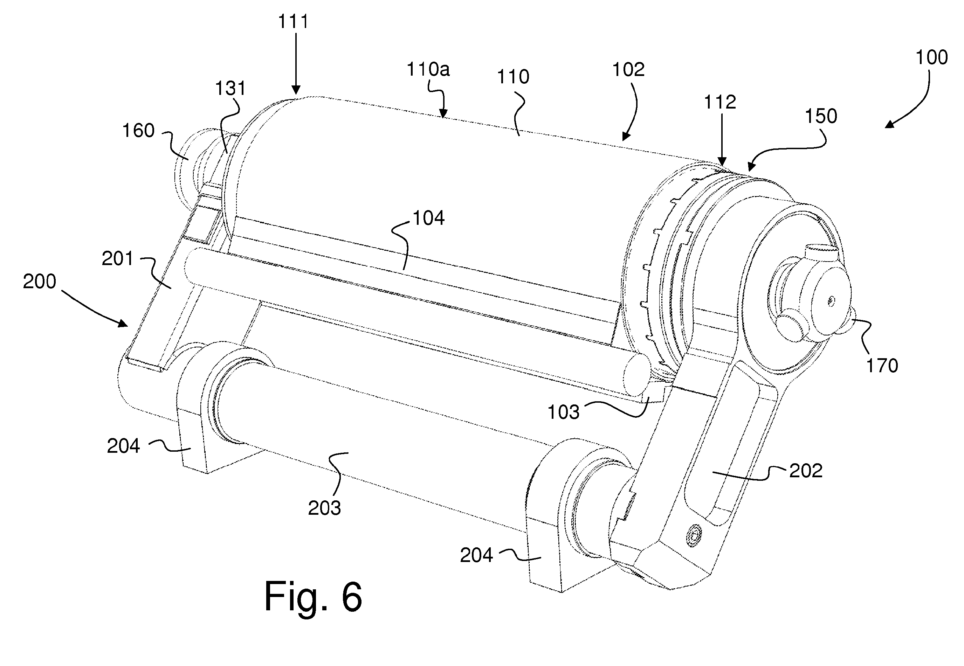

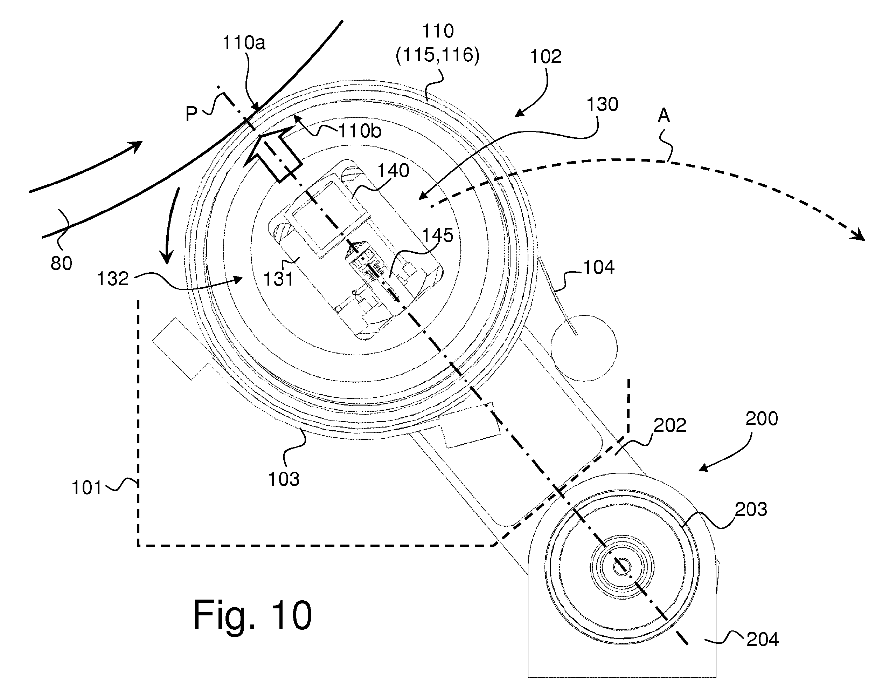

According to this embodiment of the invention, a wiping roller assembly 102 is rotatably mounted in a wiping tank 101 and comprises a rotatable hollow cylindrical body 110 whose outer surface 110a is positioned for wiping the surface of the intaglio printing cylinder 80. The wiping tank 101 is placed underneath the wiping roller assembly 102 for recuperating the wiping solution that has previously been sprayed by at least one spraying unit (not shown) against the surface of the wiping roller assembly 102. In order to efficiently remove the ink residues and the sprayed wiping solution present on the outer surface 110a of the hollow cylindrical body 110, the ink wiping system 100 further comprises cleaning means 103 for removing ink residues from the surface of the wiping roller assembly 102. Such cleaning means are known in the art, for instance from International Application No. WO 2007/116353 A1. Downstream with respect to the direction of rotation of the wiping roller assembly 102, a scraping blade 104, also known as a "drying blade", is arranged to contact the surface of the wiping roller assembly 102 and remove residual wiping solution and any potential ink residues still present on the outer surface 110a. Elements 103 and 104 are also shown in perspective view in Figures 4 and 6. Figure 10 also shows a side view of the ink wiping system with the cleaning means 103 extending circumferentially along a portion of the circumference of the wiping roller assembly 102 and the drying blade 104 located downstream of the cleaning means 103.

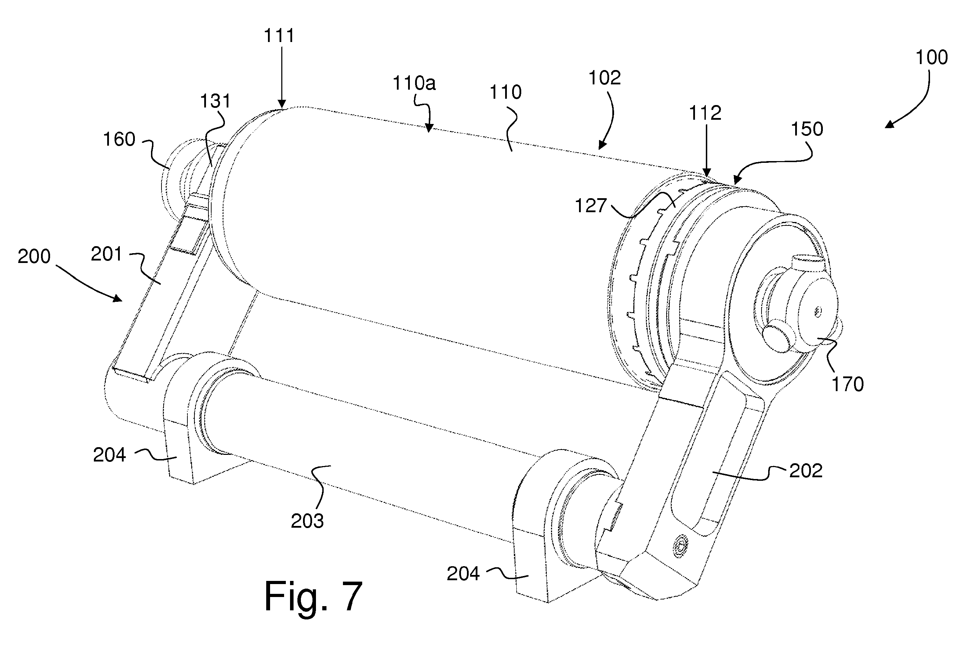

Figures 4 to 8 are various perspective views of the ink wiping system 100 showing the wiping roller assembly 102 with its hollow cylindrical body 110 mounted a corresponding supporting mechanism 200, also visible on Figure 3.

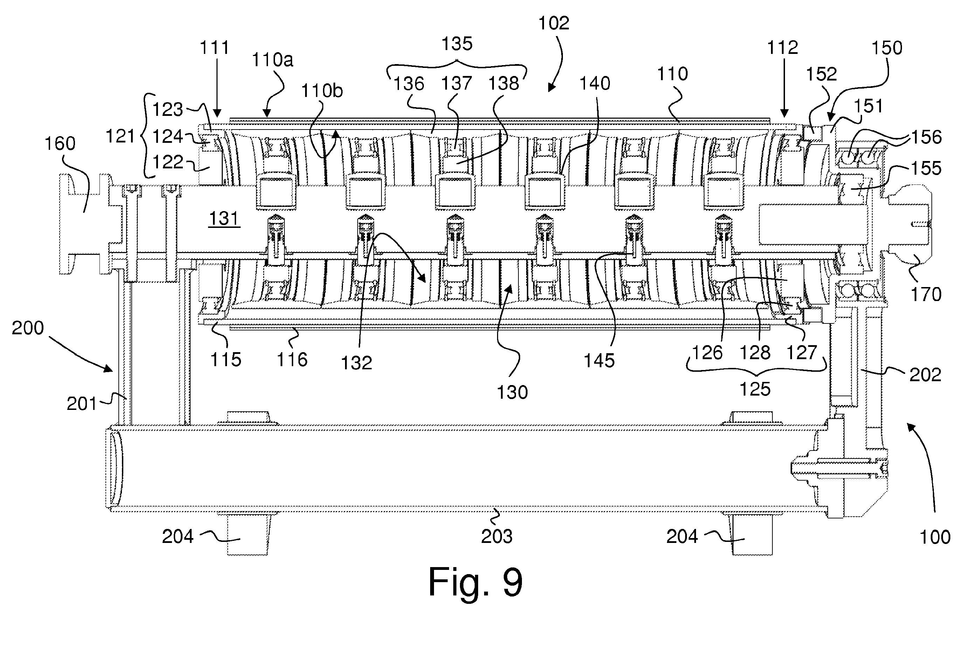

The rotatable hollow cylindrical body 110 has a fist end 111, a second end 112 and an outer surface 110a. The second end 112 is also referred to as the driving end as explained below. An elongated central beam 131 is provided in the central hollow portion of the cylindrical body 110 and extends on both sides beyond the first and second ends 111 and 112 (see also Figure 9). The hollow cylindrical body 110 is rotatably mounted on the central beam 131 with a bearing arrangement comprising a first cylinder bearing 121 provided at the first end 111, and a second cylinder bearing 125 (visible in Figure 9) provided at the second end 112.

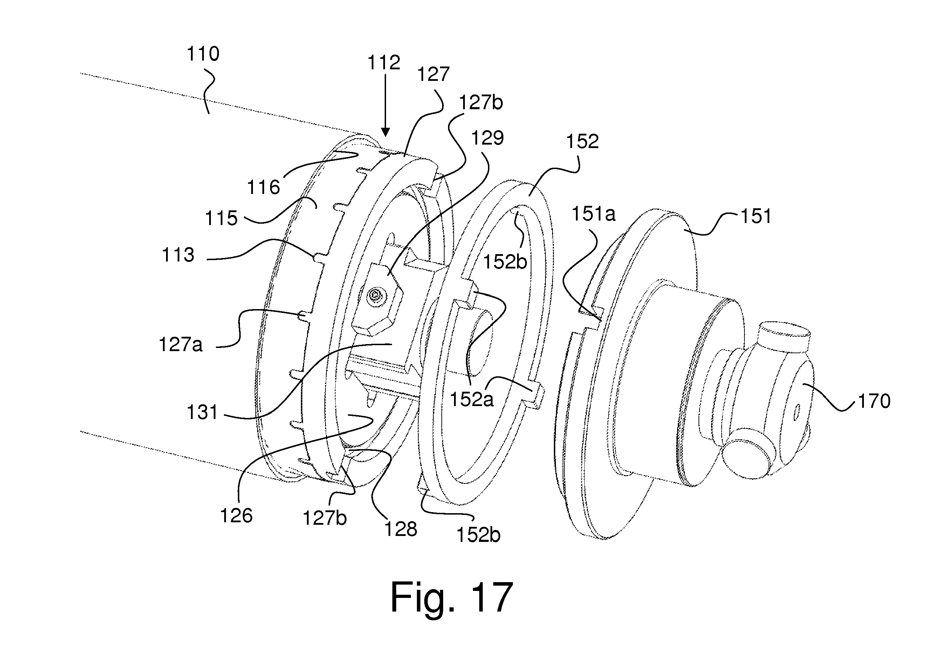

Figure 9 shows further details of the first and second cylinder bearings 121, 125. At the first end 111 of the hollow cylinder 110, the outer portion of the cylinder bearing 121 is provided with a rotatable supporting ring 123 which cooperates with the inner surface 110b of the hollow cylindrical body 110. A flange 122 is coupled to the central beam 131 and a roller bearing 124 is interposed between the flange 122 and the rotatable supporting ring 123 to allow for rotation of the rotatable hollow cylinder 110 about the central beam 131. At the second end 112, acting as a driving end, a similar configuration is provided for the second cylinder bearing 125. Namely, a rotatable supporting ring 127 is coupled to the inner surface 110b of the hollow cylindrical body 110, and a flange 126 cooperates with the central beam 131, a roller bearing 128 being interposed between the flange 126 and the rotatable supporting ring 127 to allow for rotation of the rotatable hollow cylinder 110 about the central beam 131. In this particular example, the rotatable support ring 127 is also designed as an output coupler of a so-called Oldham coupler arrangement 150, as further described in relation to Figure 17.

The central beam 131 is supported by a supporting mechanism 200 provided with two arms, a first arm 201 cooperating with the extremity of the central beam 131 proximate to the first end 111 of the cylindrical body 110 and a second arm 202 which is coupled rotatably to the second end 112 of the hollow cylindrical body 110. An elongated support beam 203 extending longitudinally, substantially parallel to the cylindrical body 110, supports both arms 201 and 202. In the illustrated example, two supporting feet 204 are provided on each side of the support beam 203 to anchor the supporting mechanism 200 to a suitable portion of the intaglio printing press and enable rotational support of the support beam 203 and associated supporting arms 201 and 202.

Figure 10 shows a sectional view of the supporting mechanism 200 where A schematically illustrates a pivotal movement allowing the wiping roller assembly 102 to be brought from the illustrated working position to a maintenance position.

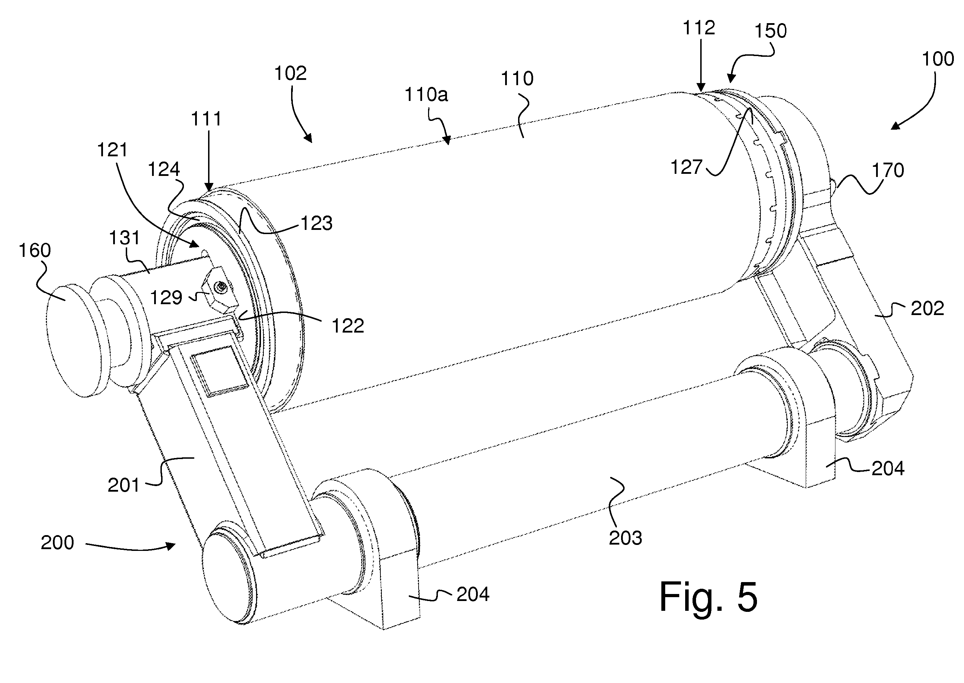

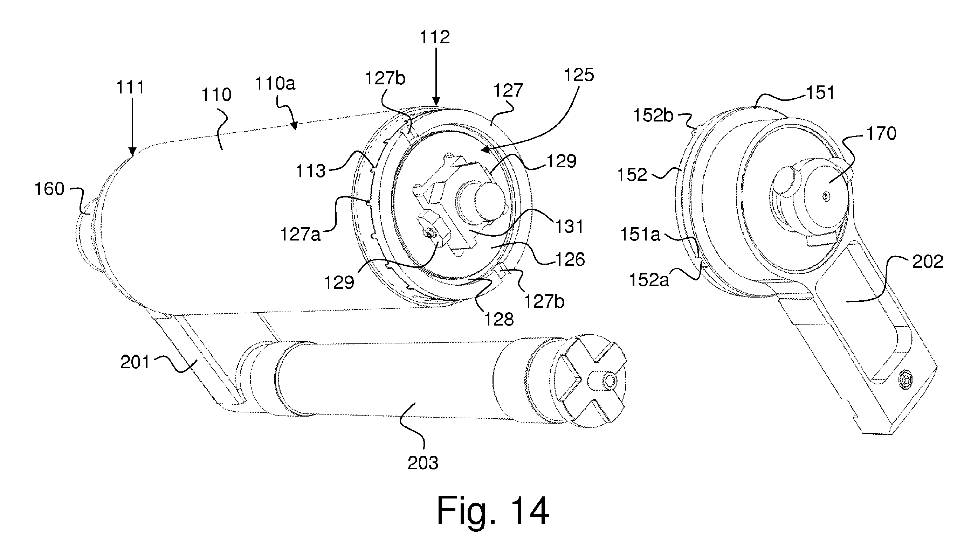

Turning back to Figures 4 and 5, lateral stops 129 (see also Figure 14) are provided on the central beam 131, on each side of the hollow cylindrical body 110, to secure the corresponding flanges 122, 126 of the first and second cylinder bearings 121, 125 on the central beam 131.

The ink wiping system 100 is further provided with a device 160, mounted on an axial extension of the central beam 131, next to the first end 111 of the hollow cylindrical body 110, to ensure an axial reciprocation of the wiping roller assembly 102 along its axis of rotation. Such device 160 can in particular be designed to act as a cam follower cooperating with a cam mechanism (not shown), as is known in the art. Reciprocation of the wiping roller assembly 102 along its axis of rotation is advantageous in that in ensures better wiping uniformity.

A tripod drive head 170, better shown in Figures 6 to 9, 13, 14 and 17, for coupling to a wiping roller drive (not shown) is provided to drive the wiping roller assembly 102 into rotation. Further details concerning the tripod drive head 170 will be given in relation to Figure 14. A suitable drive for driving the wiping roller assembly 102 into rotation is known from European Patent Application No. EP 0 881 072 A1.

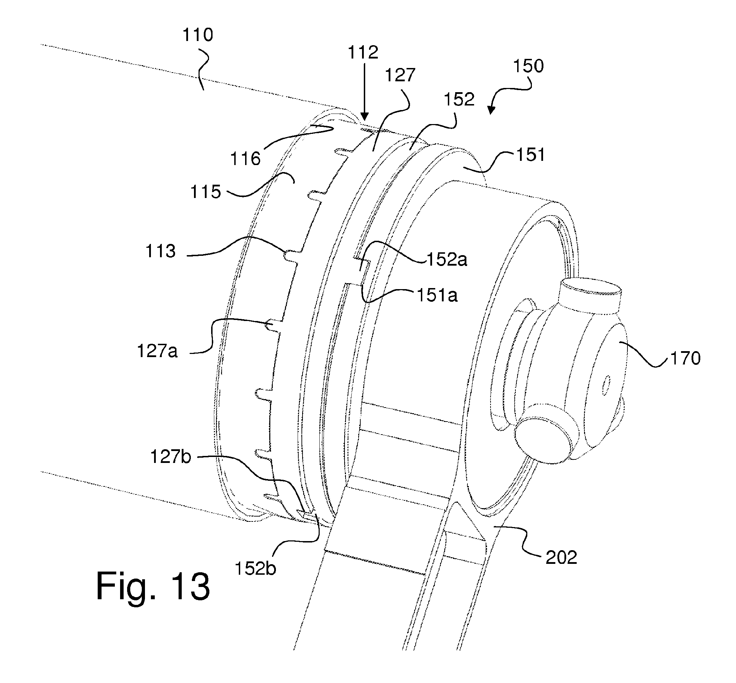

In this particular example, driving of the hollow cylindrical body 110 into rotation is ensured by way of an Oldham coupler arrangement 150 which is coupled to the driving end 112 of the hollow cylindrical body 110. More precisely, as illustrated in Figures 13 to 17, the Oldham coupler arrangement 150 comprises an input coupler 151 rotating together with the tripod drive head 170, which coupling arrangement will be discussed in greater detail in relation to Figure 17.

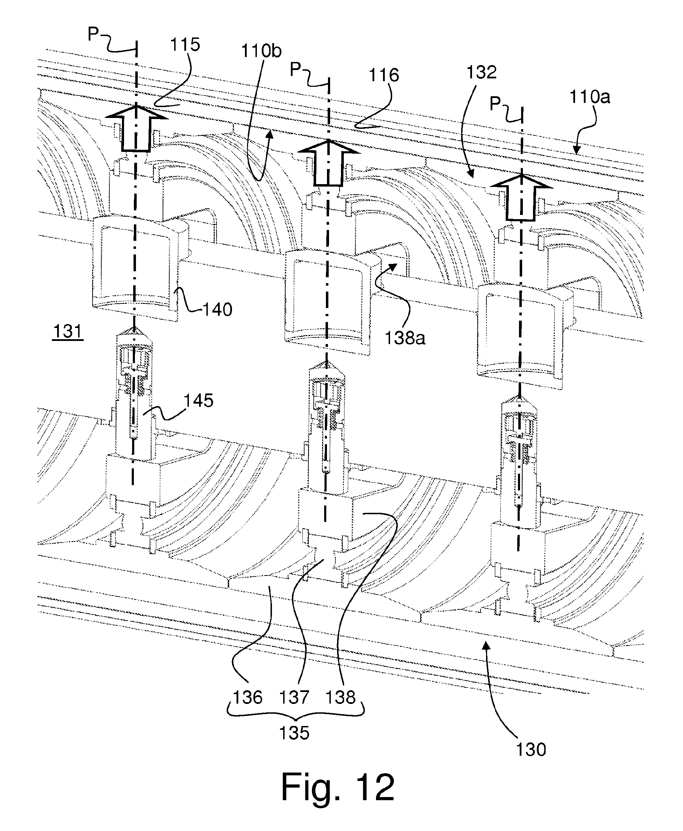

Turning now to Figures 9 to 12, one will describe further details of the components provided inside the hollow portion of the rotatable hollow cylindrical body 110. As illustrated, the rotatable hollow cylindrical body 110 is provided with a pressing device 130 disposed inside the hollow cylindrical body 110 for exerting pressure on the inner surface 110b of the hollow cylindrical body 110 and for adjusting the wiping pressure between the hollow cylindrical body 110 and the intaglio printing cylinder 80. In this particular example, the pressing device 130 is disposed on the central beam 131.

According to this preferred embodiment, the wiping pressure can be adjusted by the pressing device at a plurality of axial positions along the length of the hollow cylindrical body. In this particular example, the pressing device 130 advantageously comprises six pressing units 132 that are distributed axially along the inside of the hollow cylindrical body 110 for adjusting the wiping pressure between the hollow cylindrical body 110 and the intaglio printing cylinder 80 at six corresponding axial positions along the length of the hollow cylindrical body 110.

Each pressing unit 132 preferably comprises a position-adjustable pressing member 135 for exerting pressure on the inner surface 110b of the hollow cylindrical body 110 and an actuator 140, such as a pneumatic piston, for adjusting a radial position of the pressing member 135 inside the hollow cylindrical body 110. As shown, the actuators 140 are provided in this example on the central beam 131.

More precisely, as schematically illustrated in Figures 10 to 12, each pressing unit 132 is designed in such a way that the pressing member 135 can be translated along a line, depicted in Figures 1 and 10 to 12 by dashed-line P, under the action of the corresponding actuator 140. In this example, line P coincides, in the working position of the wiping roller assembly 102, with a line intersecting the axis of rotation of the intaglio printing cylinder 80.

Each pressing member 135 preferably comprises a rotatable pressure ring 136 positioned for rolling contact with an inner section of the inner surface 110b of the hollow cylindrical body 110 and a roller bearing 137 having an outer cage secured to the inside of the rotatable pressure ring 136, the actuator being arranged inside an inner cage of the roller bearing 137 to adjust a radial position of the rotatable pressure ring 136 and of the roller bearing 137 inside the hollow cylindrical body 110.

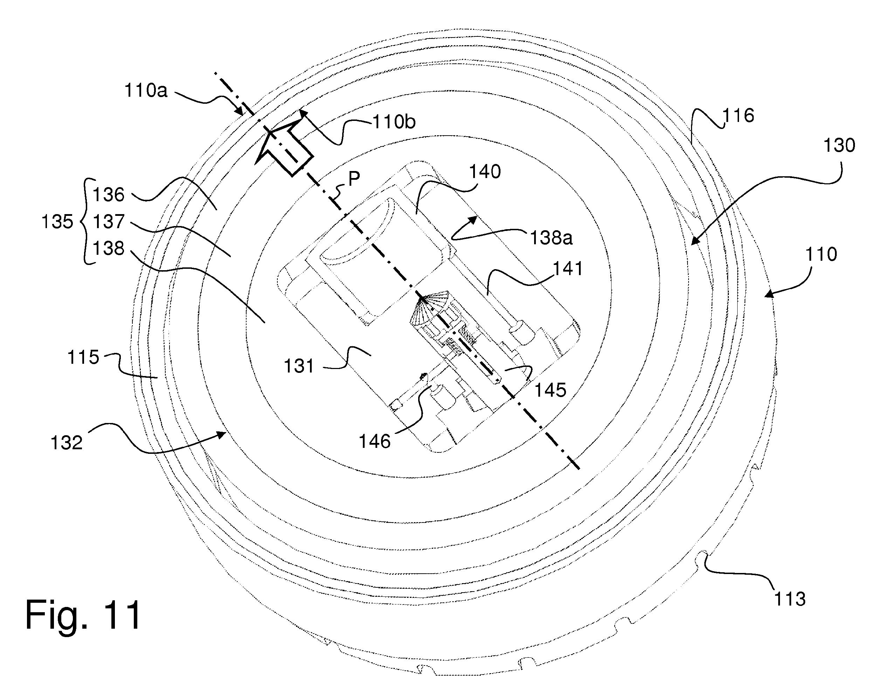

In the illustrated example, each pressing unit 132 further comprises a guide member 138 interposed between the inner cage of the roller bearing 137 and the actuator 140 for radially translating the rotatable pressure ring 136 and the roller bearing 137 under the action of the actuator 140. More precisely, as shown in Figure 11, the guide member 138 is provided with a guiding aperture 138a through which the central beam 131 runs. In other words, the guide member 138 is guided onto the central beam 131 to ensure that that the position-adjustable pressing member 135 (namely the rotatable pressure ring 136, the roller bearing 137 and the guide member 138) can be translated along line P under the action of the actuator 140.

As further shown in Figure 11, each actuator 140, which is designed in this example as a pneumatic piston, is connected to a conduit 141 running through the central beam 131 for coupling to an adequate pneumatic supply. The actuator could alternatively be actuated by hydraulic or electro-mechanical means. A pneumatic circuit with a suitable control unit (not shown) enables to individually control the pressure levels acting on each actuator 140 and therefore on each pressing unit 132.

One will thus understand that wiping pressure can be adjusted and controlled by means of each pressing unit 132 which exerts a corresponding pressure level onto a relevant section of the inner surface of the hollow cylindrical body 110 as depicted by the broad arrows in Figures 10 to 12. Wiping pressure can therefore be adjusted at a plurality of axial positions along the length of the hollow cylindrical body 110.

According to this preferred embodiment, shock absorbers or dampers 145 are further provided on the central beam 131, in opposite relationship with respect to corresponding actuators 140. Each shock absorber or damper 145 is interposed between the central beam 131 and a corresponding section of the guide member 138, opposite to the location where the actuator 140 acts on the guide member 138. These shock absorbers or dampers 145 are preferably provided in order to dissipate kinetic energy. This is particularly useful in the context of an intaglio printing press comprising a plate cylinder carrying one or more intaglio printing plates as the wiping system has to cope with the presence of corresponding cylinder pits that are provided in such a case on the plate cylinder. In essence, the shock absorbers or dampers are designed to prevent the wiping roller assembly 102 from "falling" into the cylinder pits of the intaglio printing cylinder 80. The shock absorbers or dampers 145 can advantageously be designed as hydraulic damping pistons. In such a case, as shown in Figure 11, a further conduit 146 is provided in the central beam 131 in order to couple the shock absorbers or dampers 145 to a common hydraulic supply (not shown).

Figures 9 to 13 also illustrate the construction details of the rotatable hollow cylindrical body 110. This cylindrical body 110 is preferably formed of a cylindrical base 115, for instance made of composite material, and at least one, but preferably a plurality of layers of wiping material, for instance polymer material such as PVC, provided on the outer portion of the cylindrical base 115.

International Applications Nos. WO 2007/031925 A2, WO 2007/031927 A2 and WO 2007/034362 A2, all incorporated herein by reference, describe methods and apparatuses that could be used to apply the layers of wiping material 116 onto the cylindrical base 115.

The inner surface of the cylindrical base 115 forms the inner surface 110b of the hollow cylindrical body 110, while the outer surface of the upper layer of wiping material 116 forms the outer surface 110a of the hollow cylindrical body 110. During operation, this upper layer is in contact with the surface of the intaglio-printing cylinder 80 for wiping excess ink from the surface of the intaglio-printing cylinder 80.

The cylindrical base 115 is preferably formed and/or constructed to exhibit a high resistance to torsion. Fiber-reinforced composite materials, such as carbon fiber, are preferred materials in the context of this invention.

As already mentioned hereinabove, and schematically illustrated in Figures 3 and 10, the entire wiping roller assembly 102 can be pivoted along direction A thanks to the supporting mechanism 200. In other words, the supporting mechanism 200 is designed to move the wiping roller assembly 102 between a working position (as depicted in Figures 3 and 10), where the outer surface 110a of the hollow cylindrical body 110 contacts the surface of the intaglio printing cylinder 80, and a maintenance position, where the wiping roller assembly 102 is moved away from the intaglio printing cylinder 80.

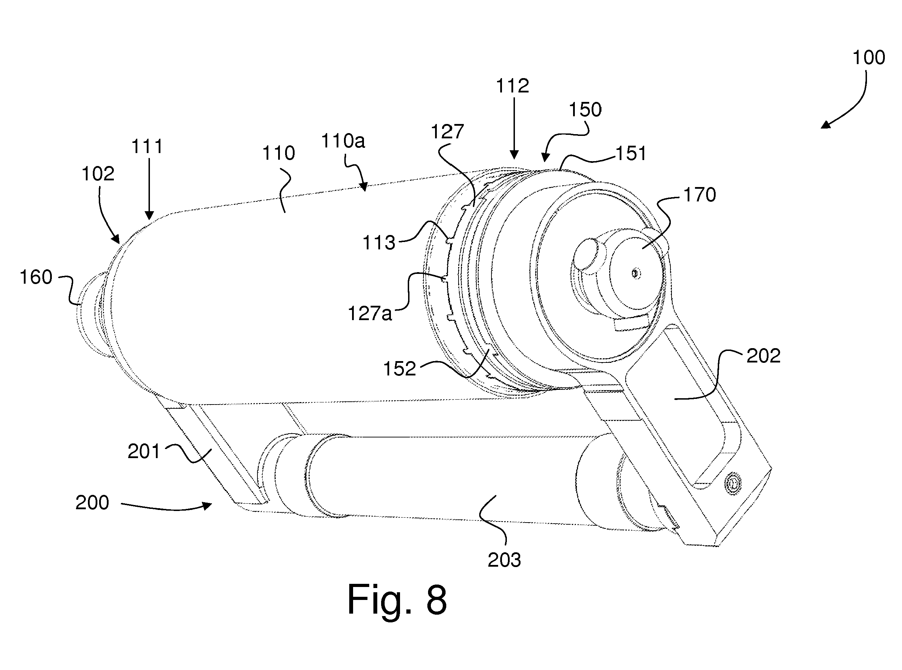

Figures 8, 9 and 13 to 17 further illustrate the mechanical coupling between the tripod drive head 170, the Oldham coupler arrangement 150 and the hollow cylindrical body 110.

The Oldham coupler arrangement 150 comprises the input coupler 151 and an intermediate coupler 152 having substantially the shape of a ring which cooperates with the rotatable supporting ring 127 of the second cylinder bearing 125. The rotatable supporting ring 127 is designed to act as output coupler of the Oldham coupler arrangement 150. The input coupler 151 is shaped as a wheel with groove sections 151 a for cooperation with corresponding tongue sections 152a provided on a first side of the intermediate coupler 152. Similarly, the rotatable supporting ring 127, acting as output coupler, is provided with groove sections 127b for cooperation with corresponding tongue sections 152b provided on a second side of the intermediate coupler 152. The tongue sections 152a, 152b are provided at right angles with respect to one another.

Rotational movement is transmitted to the hollow cylindrical body 110 by way of driving cogs 127a provided on the rotatable supporting ring 127, which driving cogs 127a cooperate with corresponding driving slots 113 provided at the second end of the hollow cylindrical body 110, namely at the corresponding end of the cylindrical base 115.

As shown in Figure 9, a roller bearing 155 is provided on an inner side of the input coupler 151 for rotational support of the input coupler 151 onto the central beam 131. Roller bearings 156 are further provided on an outer side of the output coupler 151 for allowing a rotatable support between the input coupler 151 and the extremity of the second arm 202 of the supporting mechanism 200.

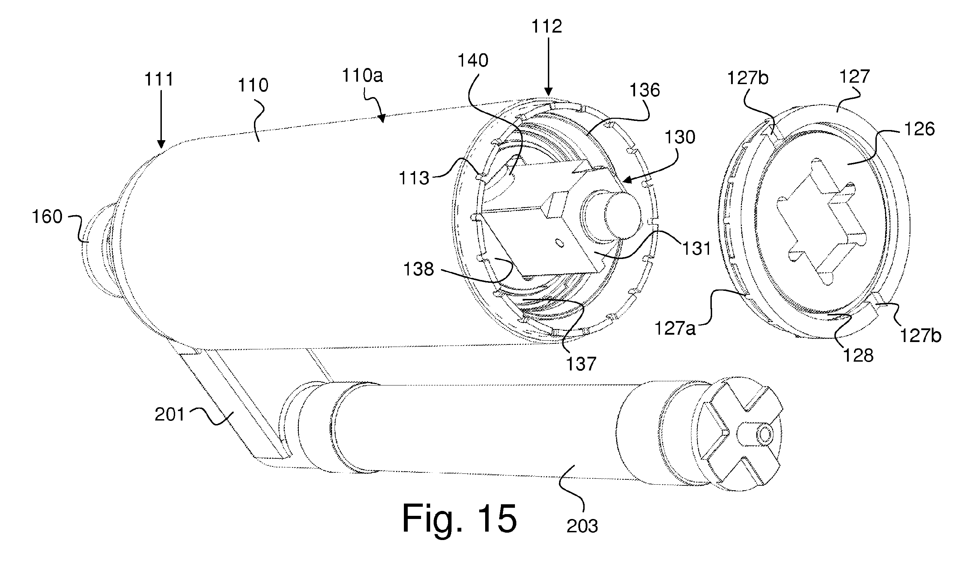

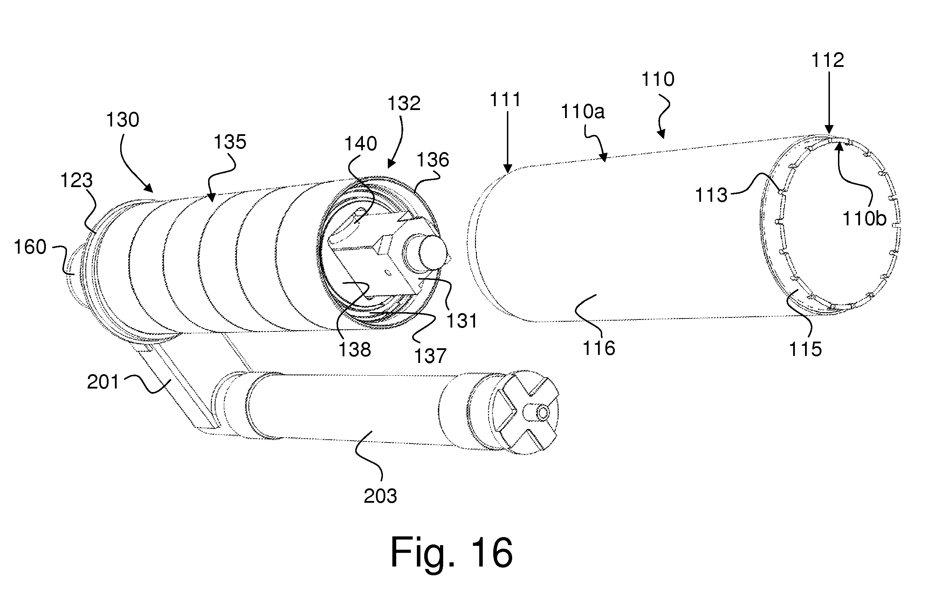

As illustrated by Figures 14 to 16, the Oldham coupler arrangement 150 can advantageously be decoupled from the wiping roller assembly 102 during maintenance operations, i.e. by decoupling the intermediate coupler 152 from the rotatable supporting ring 127. Once the lateral stops 129 holding the rotatable supporting ring 127 on the central beam 131 have been removed (see Figure 15), the rotatable supporting ring 127 can be disassembled, together with the flange 126 and roller bearing 128 to provide access to the hollow cylindrical body 110. This hollow cylindrical body 110 can then be removed from the pressing device 130 and central beam 131 by sliding the hollow cylindrical body 110 along its axis of rotation, as depicted by Figure 16, and replaced by a new one. All these steps can be carried out by a single operator and by hand, there being no need for a crane anymore as the hollow cylindrical body 110 weighs substantially less than a conventional wiping roller.

Various modifications and/or improvements may be made to the above-described embodiments without departing from the scope of the invention as defined by the annexed claims. For instance, the illustrated embodiment is provided with six pressing units 132. Variants involving a greater or lower number of pressing units can be envisaged.

In addition, while an Oldham coupler arrangement was discussed hereinabove, other coupler arrangements could be envisaged, such as a Cardan joint or like universal joint.

Furthermore, while this has not specifically been discussed above, pivoting of the wiping roller assembly 102 between the working position and the maintenance position can be carried by a suitable drive, such as an electric motor.

It is further to be appreciated that, while Figures 14 to 16 show that the second arm 202 is completely removed from the supporting mechanism 200, the supporting mechanism 200 could be designed to allow for the second arm 202 to be displaced axially away from the second end 112 of the hollow cylindrical body, while still being attached to the support beam 203, and then be pivoted out of the way of the hollow cylindrical body 110 to allow for a replacement of the hollow cylindrical body 110.

It is further to be appreciated that the above-discussed pressing device can also be used to exert pressure on a first side of a displaceable wiping medium, such as a wiping web, whose second surface, opposite the first surface, is positioned to wipe excess ink from the surface of a rotatable intaglio printing cylinder of an intaglio printing press. Use of the pressing device together with a hollow cylindrical body as discussed above is however preferred.

### LIST OF REFERENCE NUMERALS USED THEREIN

- 1: intaglio printing press (sheet-fed)
- 2: sheet feeder
- 3: intaglio printing unit
- 4: sheet delivery (with three delivery pile units)
- 5: optical inspection system (e.g. NotaSave®)
- 6: drying unit
- 7: impression cylinder (three-segment cylinder)
- 8: plate cylinder (three-segment cylinder carrying three intaglio printing plates 8a-c)
- 8a-c: intaglio printing plates
- 9: inking system (direct + indirect inking)
- 9.5: ink collecting cylinder / Orlof cylinder (two-segment cylinder)
- 9.10: ink duct (first inking unit)
- 9.11: pair of ink application rollers (first inking unit)
- 9.13: chablon cylinder / selective inking cylinder (first inking unit)
- 9.20: ink duct (second inking unit)

- 9.21: pair of ink application rollers (second inking unit)
- 9.23: chablon cylinder / selective inking cylinder (second inking unit)
- 9.30: ink duct (third inking unit)
- 9.31: pair of ink application rollers (third inking unit)
- 9.33: chablon cylinder / selective inking cylinder (third inking unit)
- 9.40: ink duct (fourth inking unit)
- 9.41: pair of ink application rollers (fourth inking unit)
- 9.43: chablon cylinder / selective inking cylinder (fourth inking unit)
- 9.44: additional ink roller (fourth inking unit)
- 10: ink wiping system
- 10.1: wiping tank
- 10.2: wiping roller
- 10.3: cleaning means for removing wiped ink residues from the surface of the wiping roller 10.2
- 10.4: drying blade for removing wiping solution residues from the surface of the wiping roller 10.2
- 11: sheet transporting system (endless conveying system with a pair of endless chains driving a plurality of spaced-apart gripper bars for holding a leading edge of the sheets)
- 12: crane (for removing wiping roller 10.2)
- 70: impression cylinder
- 80: intaglio printing cylinder
- 100: ink wiping system
- 101: wiping tank
- 102: wiping roller assembly
- 103: cleaning means for removing wiped ink residues from the surface of the wiping roller assembly 102 (see e.g. WO 2007/116353 A1)
- 104: drying blade
- 110: rotatable hollow cylindrical body
- 110a: outer surface of hollow cylindrical body 110 positioned for wiping the surface of the intaglio printing cylinder
- 110b: inner surface of hollow cylindrical body 101

- 111: first end of hollow cylindrical body 110
- 112: second end of hollow cylindrical body 110 (driving end)
- 113: driving slots for cooperation with driving cogs 127a of rotatable supporting ring 127 acting as output coupler of Oldham coupler arrangement 150
- 115: cylindrical base made e.g. of fiber-reinforced composite material
- 116: layer(s) of wiping material (e.g. polymer material such as PVC)
- 121: (first) cylinder bearing (at the first end 111)
- 122: flange of cylinder bearing 121
- 123: rotatable supporting ring of cylinder bearing 121 which is coupled to first end 111 of hollow cylindrical body 110
- 124: roller bearing
- 125: (second) cylinder bearing (at the second end 112)
- 126: flange of cylinder bearing 125
- 127: rotatable supporting ring of cylinder bearing 125 which is coupled to second end 112 of hollow cylindrical body 110 (also acts as output coupler of Oldham coupler arrangement 150)
- 127a: driving cogs for cooperation with driving slots 113
- 127b: groove sections for cooperation with tongue sections 152b of intermediate coupler 152
- 128: roller bearing
- 129: lateral stops
- 130: pressing device
- 131: central beam
- 132: pressing units (six)
- 135: position-adjustable pressing member
- 136: rotatable pressure ring
- 137: roller bearing
- 138: guide member
- 138a: guiding aperture
- 140: actuator (e.g. pneumatic piston)
- 141: conduit for pneumatic supply to actuator 140

- 145: shock absorber / damper (e.g. hydraulic damping piston)
- 146: conduit for hydraulic supply to shock absorber / damper
- 150: Oldham coupler arrangement (driving end)
- 151: input coupler (wheel-shaped) of Oldham coupler arrangement 150 which is driven into rotation by the wiping roller drive (not illustrated) via the tripod drive head 170
- 151a: groove sections for cooperation with tongue sections 152a of intermediate coupler 152
- 152: intermediate coupler (ring-shaped) interposed between the input coupler 151 and the output coupler 127 of the Oldham coupler arrangement 150
- 152a: tongue sections for cooperation with groove sections 151a on input coupler 151
- 152b: tongue sections for cooperation with groove sections 127b on output coupler 127
- 155: roller bearing for rotational support of input coupler 151 onto central beam 131
- 156: roller bearings for rotational support of the extremity of second arm 202 onto input coupler 151
- 160: device acting as cam follower for axial reciprocation of wiping roller assembly 102
- 170: tripod drive head for coupling to wiping roller drive (not illustrated)tripod drive head is secured to input disc 151 of Oldham coupler arrangement 150 for rotation therewith
- 200: supporting mechanism coupled to wiping roller assembly 102 for moving the wiping roller assembly 102 between a working position and a maintenance position
- 201: first arm of supporting mechanism 200 secured to one end of the central beam 131 proximate to the first cylinder bearing 121 which supports the first end 111 of the hollow cylindrical body 110

- 202: second arm of supporting mechanism 200 coupled rotatably to the second end 112 of the hollow cylindrical body 110 (can be decoupled from the second end 112 of the hollow cylindrical body 110)
- 203: support beam
- 204: supporting feet for rotational support of support beam 203
- A: pivotal movement to bring wiping roller assembly 102 from working position to maintenance position (and vice versa)
- P: direction along which pressure is applied between the wiping roller assembly 102 and the intaglio printing cylinder 80 / direction of translation of actuator 140 and position-adjustable pressing member 135

## Claims

1. An ink wiping system (100) for an intaglio printing press comprising a rotatable wiping roller assembly (102) for wiping excess ink from the surface of a rotatable intaglio printing cylinder (80) of the intaglio printing press,
wherein the rotatable wiping roller assembly (102) comprises:
a rotatable hollow cylindrical body (110) having an outer surface (110a) positioned for wiping the surface of the intaglio printing cylinder (80); and
a pressing device (130) disposed inside the hollow cylindrical body (110) for exerting pressure on an inner surface (110b) of the hollow cylindrical body (110) and for adjusting a wiping pressure between the hollow cylindrical body (110) and the intaglio printing cylinder (80).

2. The ink wiping system as defined in claim 1, wherein the wiping pressure between the hollow cylindrical body (110) and the intaglio printing cylinder (80) is adjustable by the pressing device (130) at a plurality of axial positions along the length of the hollow cylindrical body (110).

3. The ink wiping system as defined in claim 2, wherein the pressing device (130) comprises a plurality of pressing units (132) that are distributed axially along the inside of the hollow cylindrical body (110) for adjusting the wiping pressure between the hollow cylindrical body (110) and the intaglio printing cylinder (80) at said plurality of axial positions along the length of the hollow cylindrical body (110).

4. The ink wiping system as defined in claim 3, wherein each pressing unit (132) comprises a position-adjustable pressing member (135) for exerting pressure on the inner surface (110b) of the hollow cylindrical body (110) and an actuator (140), such as a pneumatic piston, for adjusting a radial position of the pressing member (135) inside the hollow cylindrical body (110).

5. The ink wiping system as defined in claim 4, wherein the position-adjustable pressing member (135) comprises a rotatable pressure ring (136) positioned for rolling contact with an inner section of the inner surface (110b) of the hollow cylindrical body (110) and a roller bearing (137) having on outer cage secured to the inside of the rotatable pressure ring (136),
the actuator (140) being arranged inside an inner cage of the roller bearing (137) to adjust a radial position of the rotatable pressure ring (136) and of the roller bearing (137) inside the hollow cylindrical body (110).

6. The ink wiping system as defined in claim 5, wherein each pressing unit (132) further comprises a guide member (138) interposed between the inner cage of the roller bearing (137) and the actuator (140) for radially translating the rotatable pressure ring (136) and the roller bearing (137) under the action of the actuator (140).

7. The ink wiping system as defined in any one of claims 3 to 6, wherein each pressing unit (132) further comprises a shock absorber or damper (145), such as a hydraulic damping piston, to dissipate kinetic energy.

8. The ink wiping system as defined in any one of the preceding claims, wherein the pressing device (130) is disposed on a central beam (131) extending axially through the hollow cylindrical body (110) and wherein the hollow cylindrical body (110) is rotatably supported on the central beam (131) via cylinder bearings (121, 125).

9. The ink wiping system as defined in claim 8, wherein at least one (125) of the cylinder bearings (121, 125) is removable from the central beam (131) to enable replacement of the hollow cylindrical body (110).

10. The ink wiping system as defined in any one of the preceding claims, further comprising a supporting mechanism (200) for moving the wiping roller assembly (102) between a working position, where the outer surface (110a) of the hollow cylindrical body (110) contacts the surface of the intaglio printing cylinder (80), and a maintenance position, where the wiping roller assembly (102) is moved away from the intaglio printing cylinder (80).

11. The ink wiping system as defined in any one of the preceding claims, wherein the hollow cylindrical body (110) is driven into rotation via a coupler arrangement (150) which is coupled at an input side to a drive and at an output side to an end (112) of the hollow cylindrical body (110).

12. The ink wiping system as defined in any one of the preceding claims, wherein the hollow cylindrical body (110) comprises a cylindrical base (115), preferably made of a torsion-resistant material, such as fiber-reinforced composite material, which cylindrical base (115) supports at least one layer of wiping material (116), preferably a layer of polymer material such as PVC material.

13. An intaglio printing press comprising an ink wiping system (100) as defined in any one of the preceding claims.

14. A pressing device (130) for exerting pressure on a first surface (110b) of a displaceable wiping medium (110) whose second surface (110a), opposite the first surface (110b), is positioned to wipe excess ink from the surface of a rotatable intaglio printing cylinder (80) of an intaglio printing press,
wherein the pressing device (130) extends transversely to a direction of displacement of the wiping medium (110) for adjusting a wiping pressure between the wiping medium (110) and the intaglio printing cylinder (80) at a plurality of transverse positions transversely to the direction of displacement of the wiping medium (110).

15. The pressing device as defined in claim 14, comprising a plurality of pressing units (132) that are distributed transversely to the direction of displacement of the wiping medium (110) for adjusting the wiping pressure between the wiping medium (110) and the intaglio printing cylinder (80) at said plurality of transverse positions transversely to the direction of displacement of the wiping medium (110).

16. The pressing device as defined in claim 15, wherein each pressing unit (132) comprises a position-adjustable pressing member (135) for exerting pressure on the first surface (110b) of the wiping medium (110) and an actuator (140), such as a pneumatic piston, for adjusting a position of the pressing member (135) and the pressure exerted by the pressing member (135) on the first surface (110b) of the wiping medium (110).

17. The pressing device as defined in claim 16, wherein the position-adjustable pressing member (135) comprises a rotatable pressure ring (136) positioned for rolling contact with a section of the first surface (110b) of the wiping medium (110) and a roller bearing (137) having an outer cage secured to the inside of the rotatable pressure ring (136),
the actuator (140) being arranged inside an inner cage of the roller bearing (137) to adjust a position of the rotatable pressure ring (136) and of the roller bearing (137) and the pressure exerted by the rotatable pressure ring (136) on the first surface (110b) of the wiping medium (110).

18. The pressing device as defined in claim 17, wherein each pressing unit (132) further comprises a guide member (138) interposed between the inner cage of the roller bearing (137) and the actuator (140) for translating the rotatable pressure ring (136) and the roller bearing (137) under the action of the actuator (140).

19. The pressing device as defined in any one of claims 15 to 18, wherein each pressing unit (132) further comprises a shock absorber or damper (145), such as a hydraulic damping piston, to dissipate kinetic energy.

20. The pressing device as defined in any one of claims 14 to 19, wherein the pressing device (130) is disposed on a beam (131) extending transversely to the direction of displacement of the wiping medium (110).
